# EUROPEAN PATENT APPLICATION

(11) **EP 1 277 421 A1**
(43) Date of publication of application: **22.01.2003**
(21) Application number: 02254984.4
(22) Date of filing: 16.07.2002
(51) Int. Cl.: A47B 81/06, A47B 49/00, F16M 11/28, F16M 11/04

(54) **Supporting device**

(30) Priority: 16.07.2001 GB 0117208
(71) Applicant: Albion Design & Fabrication Limited, Sandy, Bedfordshire SG19 IRB (GB)
(72) Inventor: Osborn, Richard Edward, Langford, Bedfordshire SG18 9RW (GB)
(74) Representative: Burrows, Anthony Gregory

(57) **Abstract**

A supporting device 2 for audio-visual equipment consists of three main parts, namely a normally vertical tube 4, a sleeve 6 and a collar 8. The tube 4 is the support upon which the sleeve 6 and the collar are supported. It is provided at its exterior with two diametrically opposite longitudinal slots 10. The sleeve 6 is provided at its interior with two diametrically opposite longitudinal ribs 12 which fit slidingly in the slots 10 but prevent rotation of the sleeve 6 relative to the tube 4. Extending through the wall of the sleeve 6 at at least one of the ribs 12 are two set screws 14 in threaded bores 15 in the wall of the sleeve 6 and tightenable against the base of the relevant slot 10 to fix the sleeve 6 releasably in the desired position along the tube 4. A diametral pin 16 fixed in the bases of the slots 10 prevents the sleeve 6 from falling from the lower end of the tube 4 when the set screws 14 are released. The collar 8 closely encircles the sleeve 6 co-axially and, at the level of an annular groove 18 formed around the exterior of the sleeve 6, is provided with a plurality of set screws 20 which can slide in the groove 18 to permit rotation of the collar 8 round the sleeve 6 and are mounted in threaded bores 21 through the collar 8. The screws 20 can be tightened against the base surface of the groove 18 to fix the collar 8 relative to the sleeve 6. To prevent the collar 8 from falling from the lower end of the sleeve 6 if the screws 20 are fully withdrawn relative to the groove 18, the lower end of the sleeve 6 is formed externally with an annular flange 22. The mating surfaces between the sleeve 6 and the collar 8, as well as the upper surface of the flange 22 and the lower end surface of the collar 8, are precision-machined to allow smooth rotation of the collar 8 relative to the sleeve 6.

## Description

This invention relates to the supporting of equipment, in particular the supporting of audio and/or visual equipment.

According to one aspect of the present invention, there is provided in combination:-
audio and/or visual equipment, and
an overhead supporting device comprising a downwardly extending support, a mounting carrying said equipment and so carried by said support as to be turnable with said equipment in a substantially horizontal plane about a substantially vertical axis relative to said support, a position-setting element arranged releasably to support said mounting at a desired, adjustable level relative to said support, and a stop element arranged to prevent said mounting from falling from a lower end of said support.

Owing to this aspect of the invention, the equipment, although raisable and lowerable, can be prevented from falling from the support and thus possibly being damaged, or, worse still, injuring the user or another person.

According to a second aspect of the present invention, there is provided a supporting device for equipment, comprising an elongate member provided at its exterior with a first element in the form of a guide extending longitudinally of the member, a sleeve encircling said elongate member and provided at its inner periphery with a second element co-operating with said first element so as to enable guided sliding movement of said sleeve along said member, said sleeve being provided at its outer periphery with a third element , and a collar encircling said sleeve and co-operating with said third element to enable guided sliding movement of said collar around said sleeve.

Owing to this aspect of the invention, it is possible to provide a supporting device which is relatively simple, easily adjustable, and with parts thereof relatively tightly fittable together.

According to a third aspect of the present invention, there is provided a supporting device for equipment, comprising an elongate member provided at its exterior with a guide slot extending longitudinally of the member, a sleeve encircling said elongate member and provided with setting and guiding means co-operating with said slot so as to enable guided sliding movement of said sleeve along said member and comprised of a set screw extending in a threaded bore through said sleeve and screwable against the base of said slot to fix said sleeve relative to said member, said setting and guiding means being spaced from said base.

Owing to this aspect of the invention, it is possible to avoid, in sliding of the sleeve along the member, jerkiness caused by burring of the base of the slot by the set screw.

The present supporting device is particularly applicable in a supporting system for audio-visual equipment. In its preferred embodiments, the system is modular and allows for mounting equipment in three separate ways, namely overhead suspension of the equipment (including wall mounting of the equipment), floor mounting of the equipment, and mobile mounting of the equipment.

The preferred embodiments allow for vertical movement of a collar (which constitutes a mounting boss for the equipment) along an elongate supporting member (in the form of a tube) in an infinitely variable manner and also allow for rotation of the mounting boss in an infinitely variable manner through 360° about the vertical axis of the tube, while the mounting boss is supported against falling from a sleeve co-axially encircling the tube by an external bearing flange at the lower end of the sleeve. In cases where the supporting device is for overhead mounting of the equipment, the tube is provided at its lower end with a stop element, for example a diametral pin, preventing the sleeve and thus the mounting and the equipment from falling from the tube. The tube is an extruded aluminium tube having one or more longitudinal slots or ribs formed at its exterior periphery. The sleeve has one or more projections or slots formed at its internal periphery, whereby the sleeve is guided to slide along the tube and is prevented from rotating relative to the tube. The sleeve can be locked in any desired position along the length of the tube by means of at least one locking screw which acts on the tube. The sleeve may have at least one groove around its external periphery. The boss fits over the sleeve and acts as a rotatable fixing location for attaching any rod, plate or other device for carrying the equipment. The flange on the sleeve prevents the boss from being removed in one direction from that sleeve. The boss has, at its circumference, at least one locking screw which bears against the sleeve and enables the locking of the boss in any desired rotational position relative to the sleeve.

The sleeve and the boss are advantageously precision-machined on all mating faces between them and the sleeve is advantageously precision-machined at its internal face sliding on the external face of the tube, thus to give tight, sliding fits at those faces, to promote smooth operation and reduce linear deflection. The system is designed to be light in weight, offer relatively high levels of strength and be fully interchangeable.

In order that the invention may be clearly and completely disclosed, reference will now be made, by way of example, to the accompanying drawings, in which:-
Figure 1 is an exploded, perspective view from above of the basic parts of a supporting device for equipment;
Figure 2 is a perspective view from above of the supporting device in a form for mounting at a ceiling,
Figure 3 is a perspective view from above of the supporting device in a form for mounting from a substantially vertical wall,
Figure 4 is a perspective view from above of the supporting device in a mobile form, and
Figure 5 is a view similar to Figure 1, but of a modified version of the basic parts of the supporting device.

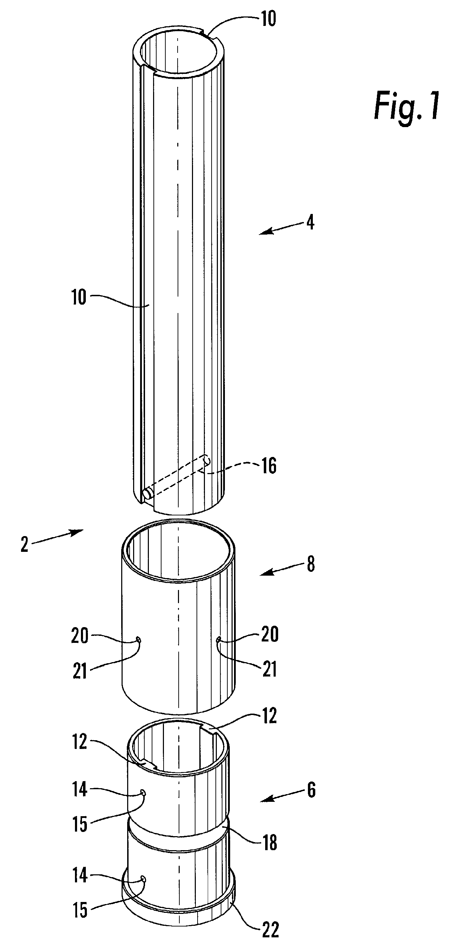

Referring to Figures 1 to 4, the supporting device 2 consists basically of three main parts, namely a tube 4, a sleeve 6 and a collar 8. The tube 4 is the main, normally vertical support upon which the sleeve and the collar 6 and 8 are themselves supported. It is provided at its exterior with two elements in the form of diametrically opposite longitudinal slots 10. The sleeve 6 fits over the tube 4 and is provided at its interior with two elements in the form of diametrically opposite longitudinal ribs 12 which fit slidingly in the slots 10 and allow the sleeve 6 to be slid guidingly along the tube 4 but prevent rotation of the sleeve 6 relative to the tube 4. Extending through the wall of the sleeve 6 at at least one of the ribs 12 are two set screws 14 in threaded bores 15 in the wall of the sleeve 6 and tightenable against the base of the relevant slot 10 to fix the sleeve 6 releasably in the desired position along the tube 4. A diametral pin 16 fixed in aligned bores in the bases of the slots 10 prevents the sleeve 6 from falling from the lower end of the tube 4 when the set screws 14 are released, the sleeve 6 abutting against the projecting ends of the pin 16. The collar 8 closely encircles the sleeve 6 co-axially and, at the level of an annular groove 18 formed around the exterior of the sleeve 6 intermediate the ends of the sleeve 6, is provided with a plurality of set screws 20 which can slide in the groove 18 to permit rotation of the collar 8 round the sleeve 6 and are mounted in threaded bores 21 through the collar 8. The screws 20 can be tightened against the base surface of the groove 18 to fix the collar 8 relative to the sleeve 6 and thus angularly relative to the tube 4. To prevent the collar 8 from falling from the lower end of the sleeve 6 if the screws 20 are fully withdrawn relative to the groove 18, the lower end of the sleeve 6 is formed externally with an annular flange 22. The mating surfaces between the sleeve 6 and the collar 8, namely the main external peripheral surface of the sleeve 6 and the internal peripheral surface of the collar 8, as well as the upper surface of the flange 22 and the lower end surface of the collar 8, are precision-machined to allow smooth rotation of the collar 8 relative to the sleeve 6. Such smooth operation is particularly desirable with audio-visual equipment. Advantageously, the slots 10 are deeper than the ribs 12, so avoiding the problem that the set screws 14 burr the bases of the slots 10 and so militate against smooth movement of the sleeve 6 up and down the tube 4.

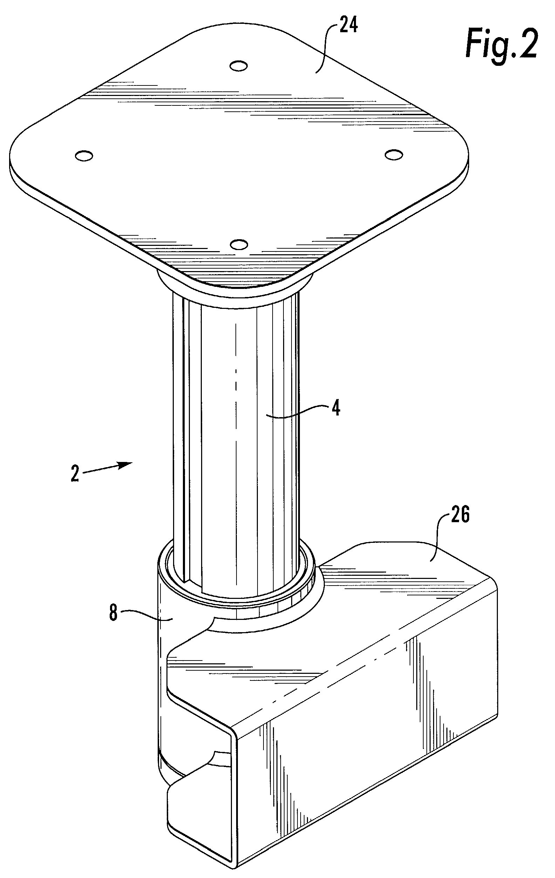

Referring to Figure 2, the basic device 2 has fixed to the upper end of its tube 4 a mounting arrangement 24 for attaching directly to a ceiling, and has attached to the outer periphery of its collar 8 a projecting bracket 26 upon which the audio-visual equipment (not shown) is directly mounted so as to be turnable through almost one revolution about a horizontal axis, with a locking nut or screw (also not shown) being usable releasably to set the equipment in its position about that axis. The equipment is thus suspended from the ceiling by way of the unit 2.

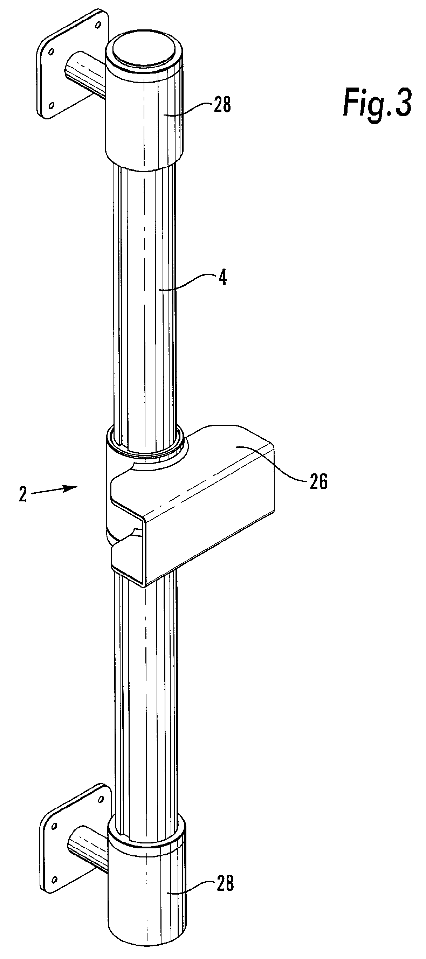

Referring to Figure 3, the upper and lower ends of the tube 4 of the unit 2 terminate in brackets 28 which are identical to each other and which are attached directly to the wall. Again, the bracket 26 directly mounts the equipment adjustably for turning about a horizontal axis.

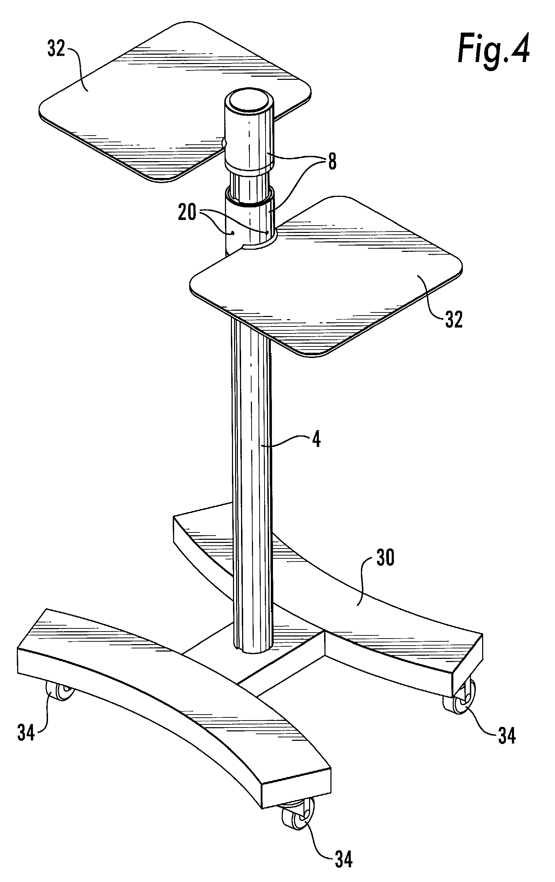

Referring to Figure 4, the tube 4 has fixed to its lower end a substantially H-shaped frame 30 and has releasably mounted on its upper end zone two sets of the items 6, 8, 14 and 20, to the collars 8 of which are attached respective tables 32 upon which audio-visual equipment can be placed. Mounted on the frame 30 are castor wheels 34 whereby the apparatus can be wheeled over the ground or floor.

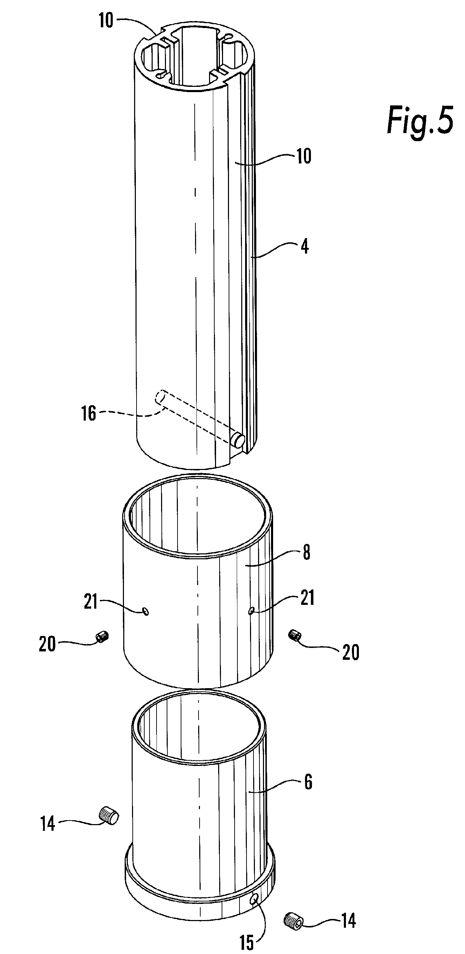

It is desirable to machine the interior surface of the sleeve 6 in order to give close fitting of the sleeve 6 over the tube 4. In order to facilitate this machining, in the modified version according to Figure 5 the ribs 12 are omitted and the set screws 14, which are in the form of button or grub screws, serve additionally to guide movement of the sleeve 6 up and down the tube 4. The omission of the ribs 12 also avoids snagging of those ribs against burrs formed in the bases of the slots 10 by the set screws 14. To minimise weakening of the sleeve 6 by the threaded holes 15, the latter are formed through the flange 22. The sleeve 6 is again prevented from falling from the lower end of the tube by coming into abutment with the projecting ends of the pin 16.

## Claims

1. In combination:-
audio and/or visual equipment, and
an overhead supporting device (2) comprising a downwardly extending support (4), a mounting (8) carrying said equipment and so carried by said support (4) as to be turnable with said equipment in a substantially horizontal plane about a substantially vertical axis relative to said support (4), a position-setting element (14) arranged releasably to support said mounting (8) at a desired, adjustable level relative to said support (4), and a stop element (16) arranged to prevent said mounting (8) from falling from a lower end of said support (4).

2. A combination according to claim 1, and further comprising a carrier (6) whereby said mounting (8) is carried by said support (4), said carrier (6) being substantially vertically displaceable relative to said support (4), and said position-setting element (14) being arranged releasably to set the vertical position of said carrier (6) relative to said support (4).

3. A combination according to claim 2, wherein said support (4) comprises an elongate member (4) provided at its exterior with a first element (10) in the form of a guide (10) extending longitudinally of the member (4), said carrier (6) comprises a sleeve (6) encircling said elongate member (4) and provided with a second element (12;14) co-operating with said first element (10) so as to enable guided sliding movement of said sleeve (6) along said member (4), said sleeve (6) being provided at its outer periphery with a third element (22), and said mounting (8) comprises a collar (8) encircling said sleeve (6) and co-operating with said third element (22) to enable guided sliding movement of said collar (8) around said sleeve (6).

4. A combination according to claim 3, wherein said first element (10) comprises a linear slot (10) and said second element (12;14) comprises a projection (12;14) co-operating with said linear slot (10).

5. A combination according to claim 4, wherein said projection (12) comprises a rib (12) and the depth of said slot (10) is greater than the depth of said rib (12).

6. A combination according to claim 4, wherein said projection (14) comprises a set screw (14) in a threaded bore (15) through said sleeve (6).

7. A combination according to any one of claims 3 to 6, wherein said third element (22) is an external abutment (22) provided at a lower end of said sleeve (6) and preventing removal of said collar (8) from said sleeve (6) via said lower end.

8. A combination according to claim 7, wherein said abutment (22) is an annular flange (22) encircling said sleeve (6).

9. A combination according to any one of claims 3 to 8, wherein the outer peripheral surface of the sleeve (6) and the inner peripheral surface of the collar (8) fit closely slidingly relative to each other.

10. A combination according to claim 9 as appended to claim 3, wherein said sleeve (6) is formed externally with a substantially annular groove (18) co-axial with said sleeve (6), and said device (2) further comprises another position-setting element (20) arranged releasably to set the angular position of said mounting (8) relative to said support (4) and in the form of a set screw (20) mounted in a threaded bore (21) through said collar (8) and arranged to press against a base surface of said groove (18).

11. A combination according to any preceding claim, wherein said support (4) is provided with a mounting arrangement (24) whereby said supporting device (2) can be mounted on a ceiling.

12. A combination according to any one of claims 1 to 10, wherein said support (4) is provided with a mounting arrangement (28) whereby said supporting device (2) can be mounted on a substantially vertical wall.

13. A supporting device for equipment, comprising an elongate member (4) provided at its exterior with a first element (10) in the form of a guide (10) extending longitudinally of the member (4), a sleeve (6) encircling said elongate member (4) and provided at its inner periphery with a second element (12;14) co-operating with said first element (10) so as to enable guided sliding movement of said sleeve (6) along said member (4), said sleeve (6) being provided at its outer periphery with a third element (22) , and a collar (8) encircling said sleeve (6) and co-operating with said third element (22) to enable guided sliding movement of said collar (8) around said sleeve (6).

14. A device according to claim 13, wherein said first element (10) comprises a linear slot (10) or linear rib and said second element (12;14) comprises a projection (12;14) co-operating with said linear slot (10) or a slot co-operating with said rib.

15. A device according to claim 13 or 14, wherein said third element (22) is an external abutment (22) provided at a lower end of said sleeve (6) and preventing removal of said collar (8) from said sleeve (6) via said lower end.

16. A device according to claim 15, wherein said abutment (22) is an annular flange (22) encircling said sleeve (6).

17. A device according to any one of claims 13 to 16, wherein the outer peripheral surface of the sleeve (6) and the inner peripheral surface of the collar (8) fit closely slidingly relative to each other.

18. A supporting device for equipment, comprising an elongate member (4) provided at its exterior with a guide slot (10) extending longitudinally of the member (4), a sleeve (6) encircling said elongate member (4) and provided with setting and guiding means (12,14;14) co-operating with said slot (10) so as to enable guided sliding movement of said sleeve (6) along said member (4) and comprised of a set screw (14) extending in a threaded bore (15) through said sleeve (6) and screwable against the base of said slot (10) to fix said sleeve (6) relative to said member (4), said setting and guiding means (12,14;14) being spaced from said base.

19. A device according to claim 18, wherein said setting and guiding means (12;14) includes a rib (12) and the depth of said slot (10) is greater than the depth of said rib (12).

20. A device according to claim 18, wherein said setting and guiding means (14) consists of said set screw (14).
